# EUROPEAN PATENT SPECIFICATION

(11) **EP 4 391 885 B1**
(45) Date of publication and mention of the grant of the patent: **15.04.2026**
(21) Application number: 22861897.1
(22) Date of filing: 17.08.2022
(51) Int. Cl.: A61B 1/247, A61C 3/00

(54) **SWIVEL HEAD DENTAL INSTRUMENT AND METHOD OF MANUFACTURING A DENTAL INSTRUMENT**
DENTALINSTRUMENT MIT SCHWENKBAREM KOPF UND VERFAHREN ZUR HERSTELLUNG EINES DENTALEN INSTRUMENTS
INSTRUMENT DENTAIRE À TÊTE PIVOTANTE SWIVEL HEAD DENTAL INSTRUMENT AND METHOD OF MANUFACTURING A DENTAL INSTRUMENT

(30) Priority: 27.08.2021 US 202163237702 P
(43) Date of publication of application: 03.07.2024
(73) Proprietor: Duniven, David, Albuquerque, NM 87111 (US)
(72) Inventor: Duniven, David, Albuquerque, NM 87111 (US)
(74) Representative: DREISS Patentanwälte PartG mbB
(86) International application number: PCT/US2022/040535
(87) International publication number: WO 2023/027918

(56) References cited:
- CN-A- 108 852 544
- US-A1- 2012 244 486
- US-A1- 2012 244 486
- JAVAID MOHD, HALEEM ABID: "Current status and applications of additive manufacturing in dentistry: A literature-based review", JOURNAL OF ORAL BIOLOGY AND CRANIOFACIAL RESEARCH, vol. 9, no. 3, 1 July 2019 (2019-07-01), pages 179 - 185, XP093040084, ISSN: 2212-4268, DOI: 10.1016/j.jobcr.2019.04.004
- PILLAI SANGEETH, UPADHYAY AKSHAYA, KHAYAMBASHI PARISA, FAROOQ IMRAN, SABRI HISHAM, TARAR MARYAM, LEE KYUNGJUN T., HARB INGRID, ZHO: "Dental 3D-Printing: Transferring Art from the Laboratories to the Clinics", POLYMERS, vol. 13, no. 1, 4 January 2021 (2021-01-04), pages 157, XP093040085, DOI: 10.3390/polym13010157

## Description

### BACKGROUND OF THE INVENTION

### 1. FIELD OF THE INVENTION

The present invention relates to dental instruments and, more particularly, to a dental hand piece having a swiveling head.

### 2. DESCRIPTION OF THE RELATED ART

Because of the small space of the mouth, the single entrance of the mouth, and the constant curvature of each tooth, even the most skilled practitioners struggle to properly position and use dental instruments. For example, fixed head instruments must be constantly manually flipped and turned at awkward angles, even while working on the same tooth. Because of the small space of the mouth, dental instruments must also approach the tooth from an angle, further adding to the difficulty of the manual work of dentistry.

Conventional manual dental instruments have fixed heads that must be constantly repositioned by flipping and turning when in use - requiring considerable dexterity. Teeth are a collection of curves, and many instruments are most effective when the working end is parallel to the tangent of the curve of the tooth. For example, cord packing is the placement of fiber in the space between the tooth and gum for the purpose of pushing the tissue away from the tooth to capture the tooth structure, either digitally or with impression material. Cord packing is particularly difficult when the position of the hand-held dental instrument is imperfect, and a significant amount of time is spent on each tooth the instrument is easier to work with, which thereby saves the dentist time and allows the dentist to create a better result when manipulating that dental instrument. The most common approach to cord packing is the placement of two pieces of retraction cord using a cord packer. This approach requires significant dexterous skill, however, so many general practitioners do not use it because of the time required to master the technique.

Accordingly, there is a need in the art for a hand-held dental instrument that can be more easily be repositioned during use and thus make dental techniques, such as cord packing, easier to accomplish.

US 2012/244486 A1 discloses a dental tool including a head and a handle. The head comprises a working portion and a neck, wherein the working portion extends from a first end of the neck. The handle includes a clamp and a socket. A second end of the neck can be pivoted in the socket to move the working portion and the neck relative to the handle.

CN 108 852 544 A discloses a multifunctional assembly-type saliva suction pipe.

### BRIEF SUMMARY OF THE INVENTION

A dental instrument according to the invention is defined in claim 1 and a method of manufacturing a dental instrument according to the invention is defined in claim 9.

The present invention provides a hand-held dental instrument having a working end that can be easily rotated into a desired position in the mouth of a patient while the handle of the instrument is held in place by the user. More specifically, the dental instrument has a handle extending along a first axis and a working end that is rotatably coupled to the handle and extends along a second axis. The working end of the dental instrument is rotatably coupled to the handle by a rotational joint formed by a housing having a cavity with a first geometry and a member with a second geometry that corresponds to the first geometry and positioned in the cavity so that the housing and the member are free to rotate relative to each other. The housing may include at least one finger rest formed in the exterior surface so that a user can easily rotate the housing, and thus the working end. In one aspect, the member is fixedly connected to the handle via a shaft and the housing is fixedly connected to the working end, although the rotational joint could be reversed. The shaft may be fixedly connected to the handle via a bend so that the second axis of the working end extends obliquely from the first axis of the handle. The working end of the dental instrument may be selected from the group including but not limited to a cord packer, a Woodson end, a periotome end, and a periosteal end or other ends. The housing of the dental instrument may be formed as a single unit encapsulating the rotational member, such as by three-dimensional printing, and from a material that is autoclavable or disposable. The rotational joint may also be formed by a means other than three dimensional printing.

The present invention also includes a method of manufacturing a hand-held dental instrument. In one step, a handle extending along a first axis is coupled to a working end extending along a second axis using a rotational joint having a housing with a cavity of a first geometry formed therein and a member of a second, corresponding geometry rotatably positioned in the cavity. The housing may include at least one finger rest. Another step involves forming the rotational joint, such as by integrally forming the housing around the member. The step of forming the rotational joint may comprise three-dimensionally printing the housing and the member simultaneously. The step of forming the rotational joint may also comprise using a material that is autoclavable.

### BRIEF DESCRIPTION OF THE SEVERAL VIEWS OF THE DRAWING(S)

The present invention will be more fully understood and appreciated by reading the following Detailed Description in conjunction with the accompanying drawings, in which:
FIG. 1A is a perspective view of a dental instrument having a rotational joint according to the present invention;
FIG. 1B is a side view of a tip of a dental instrument that can be rotated according to the present invention;
FIG. 1C is a front view of tip of a dental instrument that can be rotated according to the present invention;
FIG. 1D is a bottom view of a tip of a dental instrument that can be rotated according to the present invention;
FIG. 2 is an end view of a rotational joint having two finger rests for use in rotating the housing of the rotational joint;
FIG. 3 is a top view of a rotational joint with three finger rests for use in rotating the housing of the rotational joint;

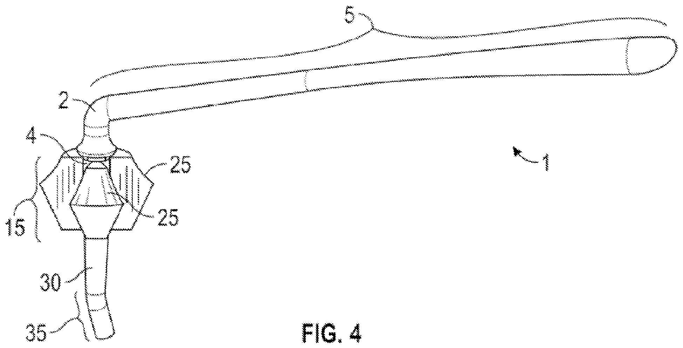

FIG. 4 is a side view of a dental instrument having a rotational joint with three finger rests for use in rotating the housing of the rotational joint;
FIG. 5 is a side view of a dental instrument having a rotational joint where the rotation of axis is perpendicular to the longitudinal axis of the handle;
FIG. 6 is a side view of a dental instrument having a rotational joint where the rotation of axis is oblique to the longitudinal axis of the handle

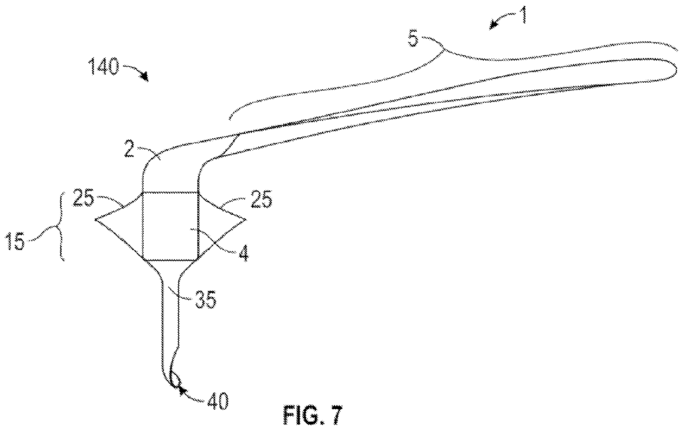

FIG. 7 is a side view of a dental instrument having a rotational joint connecting the handle to a swivel-tome tip;

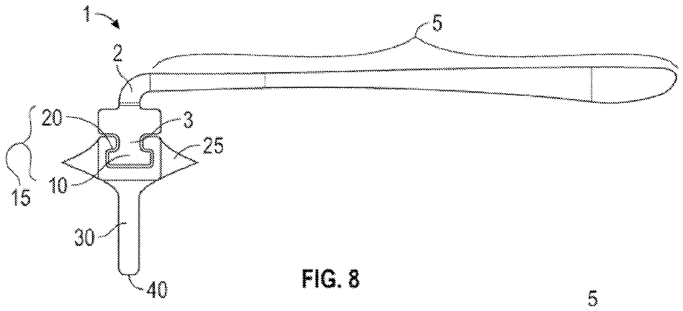

FIG. 8 is a cross-sectional view of a dental instrument having a rotational joint according to the present invention;
FIG. 9 is a cross-sectional view of a rotational joint for a dental instrument according to the present invention;
FIG. 10A is a cross-sectional view of a dental instrument having a rotational joint coupling the handle to a first embodiment of a working end;
FIG. 10B is a cross-sectional view of a dental instrument having a rotational joint coupling the handle to another embodiment of a working end;
FIG. 10C is a cross-sectional view of a dental instrument having a rotational joint coupling the handle to a further embodiment of a working end; and
FIG. 10D is a cross-sectional view of a dental instrument having a rotational joint coupling the handle to an additional embodiment of a working end.

### DETAILED DESCRIPTION OF THE INVENTION

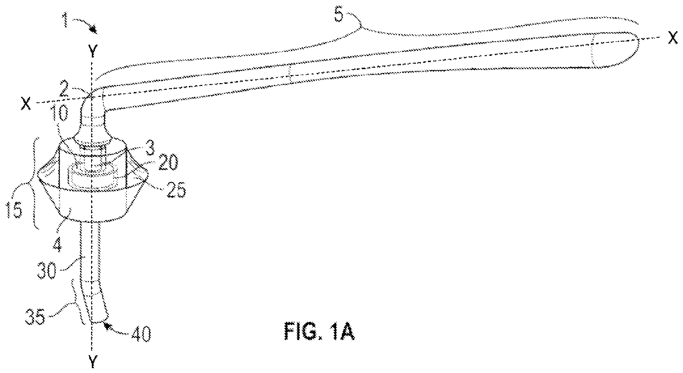

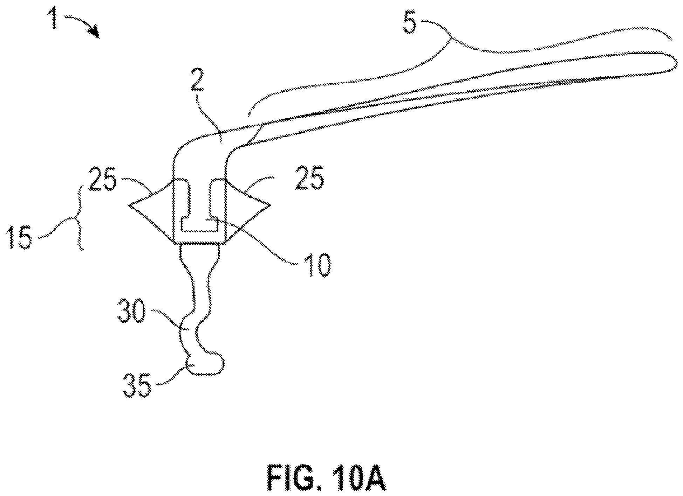

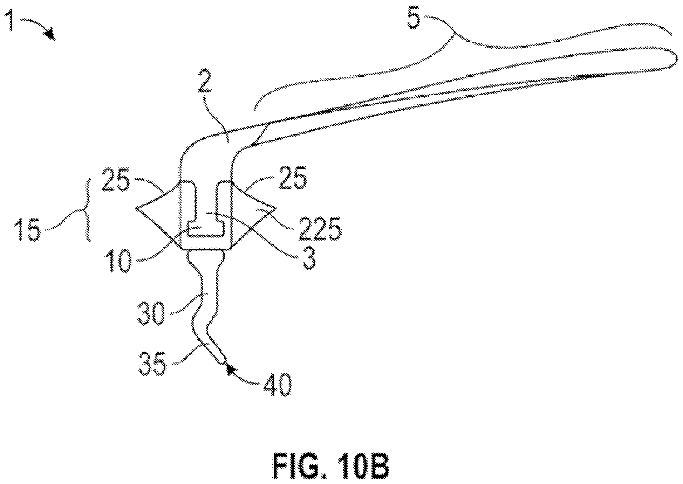

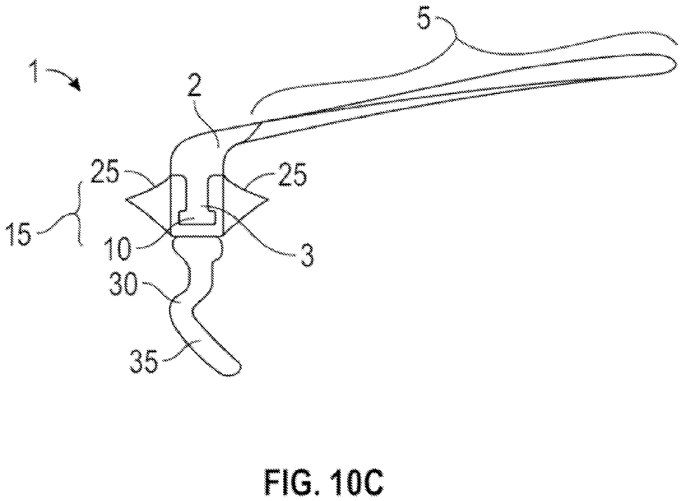

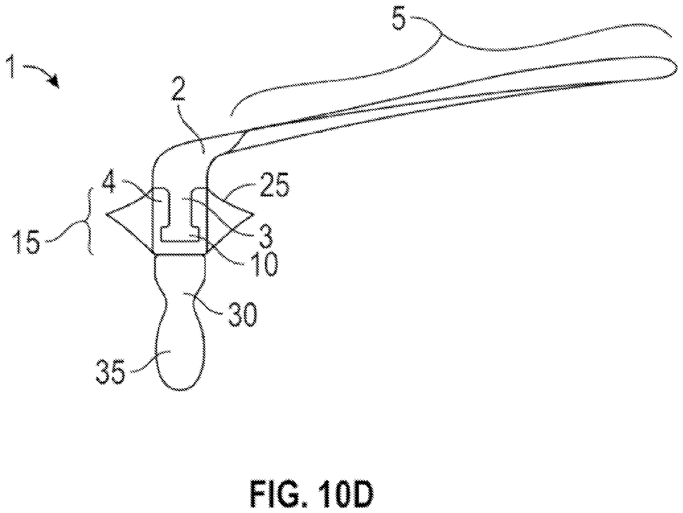

Referring to the figures, wherein like numerals refer to like parts throughout, there is seen in FIG. 1A, a dental instrument 1 having a rotational joint 15 that allows a working end 35 supporting a dental tip 40 to be easily rotated/swiveled for proper positioning during a dental procedure without having to reorient the entire dental instrument 1. Referring to FIGS. 10A through 10D, working end 35 may comprise any number of different configurations that replicate existing dental instruments, such as a cord packer, a Woodson end, a periotome end, or a periosteal end. It should be recognized that tip 40 could be shaped in any conventional or original manner for use with the present invention, the combination of which may accommodate any end.

As working in the mouth provides only one point of entry for instruments, the increased flexibility of dental instrument 1 and the ability to easily rotate and reposition working end 35 allows dental instrument 1 to be placed at its most effective position. Dental instrument 1 thus allows dentists to more easily work on teeth without trying to angle the instrument excessively, as is now the case with fixed instruments. Dental instrument 1 is particularly useful when configured as a cord packer because positioning of working end 35 is much easier as rotation of working end 35 facilitates the use of the two-cord technique for a greater number of practitioners. The rotational movement of dental instrument 1 also reduces the time needed for virtually any procedure as a dentist can quickly place working end 35 parallel to the tangent of the curve of the tooth via finger rests 25. Dental instrument 1 is also useful when configured as a periotome as it can assist in severing soft tissue attachments and prevent soft tissue injuries that often occur during the extraction of periodontally involved teeth. Because the cutting edge of the periotome is meant to be used at an angle parallel to the tangent of the curve of the tooth, much like a cord packer, the ability to quickly and easily reposition working end 35 of dental instrument 1 allows the user to more easily maintain the proper angle for severing the fibers connecting the tooth to the gingiva without severing the gingiva.

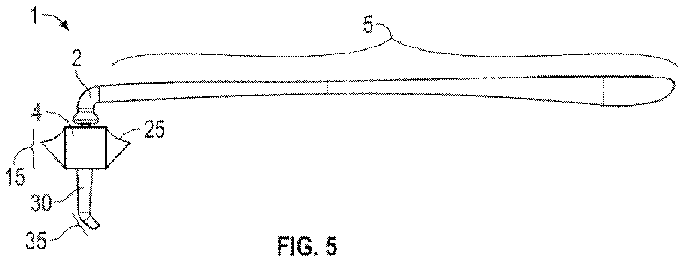

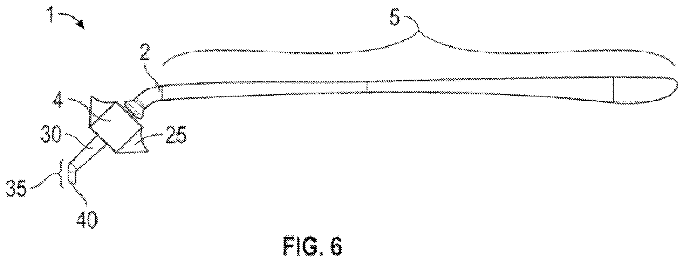

As seen in FIG. 1A, dental instrument 1 has a handle 5 extending along a longitudinal axis X-X. Handle 5 may include a contoured surface to improve ergonomics when grasped by the hand of a dentist or other user. Handle 5 is coupled to a bend 2 that extends along a second axis Y-Y. Bend 2 may be perpendicular or oblique to axis X-X so that handle 5 is positioned at an angle to working end 35 and thus tip 40. Bend 2 can also comprise any angle of from about 1 degree to about 180 or more degrees. As illustrated in FIGS. 5 and 6, bend 2 may extend at about 90 degrees. For some applications, axis Y-Y of bend 2 may extend nearly in parallel with axis X-X so that dental instrument 1 is essentially straight.

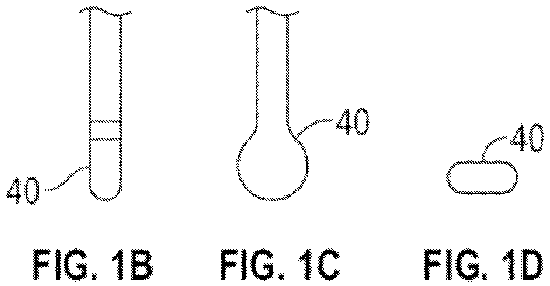

As further seen in FIG. 1A, rotational joint 15 comprises a housing 4 that defines an inner cavity 20 having a predetermined geometry, such as a disk shape. Housing 4 is non-rotatably secured to working end 35 via a shank 30. Bend 2 is coupled to a shaft 3 that extends along axis Y-Y and is non-rotatably secured to the center of a member 10. Member 10 has a predetermined geometry that corresponds to the predetermined geometry of cavity 20 so that housing 4 and cavity 20 can rotate around member 10 and thus about axis Y-Y. For example, member 10 is illustrated as disk shaped and positioned in cavity 20 that is correspondingly disk-shaped. It should be recognized that other geometric shapes, such as spheres or spheroids, could be used, such as those shown in FIGS 1B, 1C and 1D. As a result, housing 4 is free to rotate about member 10 in response to a rotational force applied to the exterior of housing 4 by a user. As a result, working end 35 can be rotated into different orientations relative to handle 5 by a user while handle 5 remains in position. A user can thus easily reorient working end 35 while dental instrument 1 is being held in the hand of the user and positioned in a subject mouth simply be applying a force to housing 4 so that housing 4 rotates about member 10.

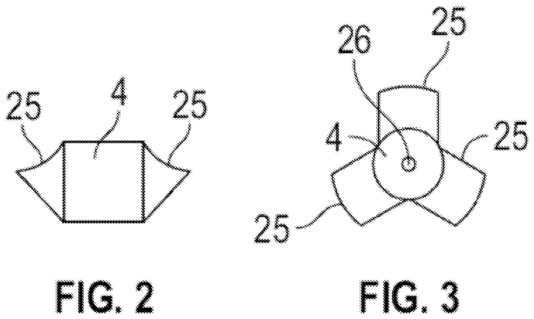

The exterior of housing 4 may be contoured to define one or more finger rests 25 so that a user can more easily rotate housing 4 relative to handle 5, and thus easily reposition working end 35 during a dental procedure so that tip 40 is in the best position for the particular phase of the procedure. Finger rests 25 preferably extend outward from housing 4 and include angled or tapered surfaces that readily accommodate the finger or fingers of a user. As seen in FIG. 1A, a single finger rest 25 may extend around housing 4. As seen in FIG. 2, housing 4 may form two opposing finger rests 25 or, as seen in FIG. 3, three finger rests 25.

As further seen in FIG. 1A, shank 30 and working end 35 may be coupled together at any angle typically between about 10 to about 30 degrees and, preferably, about 15 degrees. Working end 35 can be configured to have any desired size and shape and can be formed from any desired material. For example, as seen in in FIGS. 1B, 1C, and 1D, tip 40 may be disk-shaped. Although tip 40 can be formed in any desired size, in one embodiment tip 40 may have a width of about one to about three millimeters, preferably two millimeters, and a diameter of about 4 to about 7 millimeters, preferably a 5 to about 6 millimeters. Shank 30, working end 35, and tip 40 may be formed separately or integrally as a single continuous unit from a continuous piece of material. Working end 35 and tip 40 are preferably configured as a cord packer, a Woodson end, a periotome end, or a periosteal end or any other end.

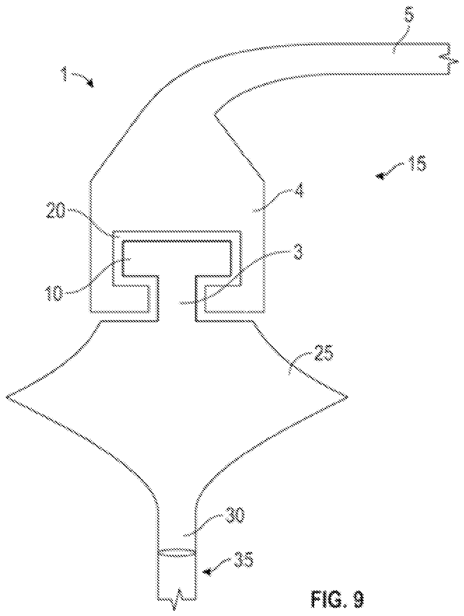

It should be recognized that rotational couplings other than member 10 and cavity 20 may be used. For example, member 10 and cavity 20 could be spherically shaped while continuing to provide the desired rotational motion of member 10 and cavity 20 relative to each other. Cavity 20 may also include a lubricant, such as oil, to reduce friction of cavity 20 as it rotates about member 10. For the best rotational motion, cavity 20 and member 10 are preferably sized to allow for any clearance of about 1 to about 100 thousands of an inch and, preferably, about 10 to about 25 thousandths of an inch. Referring to FIG. 9, the components of rotational joint 15 can be reversed without departing from the present invention so that disk 10 is secured to working end 35 via shaft 3, and bend 2 is fixedly secured to housing 4 containing cavity 20. In this approach, finger rests 25 are positioned externally of housing 4 and fixed to or integrally formed with shaft 3, so that a user can rotate working end 35 relative to handle 5. communicably coupled or formed from the same piece of material as one or more finger rests 25.

Dental instrument 1 may be formed from metal or other suitable material, such as any medical grade metals or plastic or other materials conventionally used for medical and dental instruments. Various components of dental instrument 1 may also be formed by polymers and manufactured using molding or 3D printing processes. For example, housing 4, shaft 3, and member 10 may be 3D printed as a unit to form rotational joint 14 as an encapsulated joint in one or more manufacturing steps. In one embodiment, dental instrument 1 is configured to be autoclavable for sterilizing between uses with different patients. However, dental instrument 1 may also be composed of plastic or other disposable medical grade material.

## Claims

1. A dental instrument (1), comprising:
- a handle (5) extending along a first axis; and
- a working end (35) rotatably coupled to said handle (5) and extending along a second axis,
- wherein the working end (35) is rotatably coupled to the handle (5) by a rotational joint (15),
- wherein the rotational joint (15) comprises a housing (4) having a cavity (20) having a first predetermined geometry formed therein and a member (10) having second predetermined geometry corresponding to the first predetermined geometry positioned in the cavity (20) and free to rotate relative to the cavity (20),
**characterized in that**
- the housing (4) is free to rotate about member (10) in response to a rotational force applied to the exterior of housing (4) by a user to rotate the working end (35) into different orientations relative to the handle (5) by the user while the handle (5) remains in position.

2. The dental instrument (1) of claim 1, wherein the housing (4) includes at least one finger rest (25).

3. The dental instrument (1) of claim 2, wherein the member (10) is fixedly connected to the handle (5) via a shaft (3).

4. The dental instrument (1) of claim 3, wherein the housing (4) is fixedly connected to the working end (35).

5. The dental instrument (1) of claim 4, wherein the shaft is fixedly connected to the handle (5) via a bend so that the second axis of the working end (35) is oblique with respect to the first axis.

6. The dental instrument (1) of claim 5, wherein the working end (35) is an implement selected from the group consisting of a cord packer, a Woodson end, and a periotome end.

7. The dental instrument (1) of claim 6, wherein the housing (4) encapsulates the member (10).

8. The dental instrument (1) of claim 7, wherein the dental instrument (1) is formed from a material that is autoclavable or disposable.

9. A method of manufacturing a dental instrument (1) according to claim 1, comprising the step of coupling a handle (5) extending along a first axis to a working end (35) extending along a second axis using a rotational joint (15) having a housing (4) with a cavity (20) of a first predetermined geometry formed therein and a member (10) of a second predetermined geometry rotatably positioned in the cavity (20), such that the housing (4) is free to rotate about member (10) in response to a rotational force applied to the exterior of housing (4) by a user to rotate the working end (35) into different orientations relative to the handle (5) by the user while the handle (5) remains in position.

10. The method of claim 9, further comprising the step of forming the rotational joint (15) so that the housing (4) is integrally formed around the member (10).

11. The method of claim 10, wherein the housing (4) includes at least one finger rest (25).

12. The method of claim 11, wherein the step of forming the rotational joint (15) comprises three dimensionally printing the housing (4) and the member (10) simultaneously.

13. The method of claim 12, wherein the rotational joint (15) is formed from a material that is autoclavable or disposable.

## Patentansprüche

1. Dentalinstrument (1), umfassend:
- einen Griff (5), der sich entlang einer ersten Achse erstreckt; und
- ein Arbeitsende (35), das an den Griff (5) drehbar gekoppelt ist und sich entlang einer zweiten Achse erstreckt,
- wobei das Arbeitsende (35) durch ein Drehgelenk (15) an den Griff (5) drehbar gekoppelt ist,
- wobei das Drehgelenk (15) ein Gehäuse (4) umfasst, das einen Hohlraum (20), der eine erste vorbestimmte Geometrie aufweist, die darin ausgebildet ist, und ein Element (10) aufweist, das eine zweite vorbestimmte Geometrie aufweist, die der ersten vorbestimmten Geometrie entspricht, die in dem Hohlraum (20) positioniert und sich relativ zu dem Hohlraum (20) frei drehen kann,
**dadurch gekennzeichnet, dass**
- das Gehäuse (4) sich um das Element (10) frei drehen kann als Reaktion auf eine Drehkraft, die durch einen Benutzer auf die Außenseite des Gehäuses (4) aufgebracht wird, um das Arbeitsende (35) durch den Benutzer in verschiedene Ausrichtungen relativ zu dem Griff (5) zu drehen, während der Griff (5) in Position verbleibt.

2. Dentalinstrument (1) nach Anspruch 1, wobei das Gehäuse (4) mindestens eine Fingerauflage (25) einschließt.

3. Dentalinstrument (1) nach Anspruch 2, wobei das Element (10) über eine Welle (3) mit dem Griff (5) fest verbunden ist.

4. Dentalinstrument (1) nach Anspruch 3, wobei das Gehäuse (4) mit dem Arbeitsende (35) fest verbunden ist.

5. Dentalinstrument (1) nach Anspruch 4, wobei die Welle über eine Biegung mit dem Griff (5) fest verbunden ist, sodass die zweite Achse des Arbeitsendes (35) hinsichtlich zu der ersten Achse schräg ist.

6. Dentalinstrument (1) nach Anspruch 5, wobei das Arbeitsende (35) ein Werkzeug ist, das aus der Gruppe ausgewählt ist, bestehend aus einem Cordpacker, einem Woodson-Ende und einem Periotom-Ende.

7. Dentalinstrument (1) nach Anspruch 6, wobei das Gehäuse (4) das Element (10) einkapselt.

8. Dentalinstrument (1) nach Anspruch 7, wobei das Dentalinstrument (1) aus einem Material ausgebildet ist, das autoklavierbar oder wegwerfbar ist.

9. Verfahren zum Herstellen eines Dentalinstruments (1) nach Anspruch 1, umfassend den Schritt des Koppelns eines Griffs (5), der sich entlang einer ersten Achse erstreckt, an einem Arbeitsende (35), das sich entlang einer zweiten Achse erstreckt, unter Verwendung eines Drehgelenks (15), das ein Gehäuse (4) mit einem darin ausgebildeten Hohlraum (20) einer ersten vorbestimmten Geometrie und ein Element (10) einer zweiten vorbestimmten Geometrie aufweist, das in dem Hohlraum (20) drehbar positioniert ist, derart, dass das Gehäuse (4) um das Element (10) frei drehbar ist als Reaktion auf eine Drehkraft, die durch einen Benutzer auf die Außenseite des Gehäuses (4) aufgebracht wird, um das Arbeitsende (35) durch den Benutzer in verschiedene Ausrichtungen relativ zu dem Griff (5) zu drehen, während der Griff (5) in Position verbleibt.

10. Verfahren nach Anspruch 9, ferner umfassend den Schritt des Ausbildens des Drehgelenks (15), sodass das Gehäuse (4) um das Element (10) integral ausgebildet wird.

11. Verfahren nach Anspruch 10, wobei das Gehäuse (4) mindestens eine Fingerauflage (25) einschließt.

12. Verfahren nach Anspruch 11, wobei der Schritt des Ausbildens des Drehgelenks (15) das dreidimensionale Drucken des Gehäuses (4) und des Elements (10) gleichzeitig umfasst.

13. Verfahren nach Anspruch 12, wobei das Drehgelenk (15) aus einem Material ausgebildet ist, das autoklavierbar oder wegwerfbar ist.

## Revendications

1. Instrument dentaire (1), comprenant :
- une poignée (5) s'étendant le long d'un premier axe ; et
- une extrémité de travail (35) accouplée de manière rotative à ladite poignée (5) et s'étendant le long d'un second
axe,
- dans lequel l'extrémité de travail (35) est accouplée de manière rotative à ladite poignée (5) par un joint rotatif (15),
- dans lequel le joint rotatif (15) comprend un logement (4) ayant une cavité (20) ayant une première géométrie prédéterminée formée à l'intérieur de celui-ci et un élément (10) ayant une seconde géométrie prédéterminée correspondant à la première géométrie prédéterminée positionné dans la cavité (20) et libre de tourner par rapport à la cavité (20),
**caractérisé en ce que**
- le logement (4) est libre de tourner autour d'un élément (10) en réponse à une force de rotation appliquée à l'extérieur d'un logement (4) par un utilisateur pour faire tourner l'extrémité de travail (35) dans des orientations différentes par rapport à la poignée (5) par l'utilisateur pendant que la poignée (5) reste en position.

2. Instrument dentaire (1) selon la revendication 1, dans lequel le logement (4) comporte au moins un repose-doigts (25).

3. Instrument dentaire (1) selon la revendication 2, dans lequel l'élément (10) est relié de manière fixe à la poignée (5) par l'intermédiaire d'un arbre (3).

4. Instrument dentaire (1) selon la revendication 3, dans lequel le logement (4) est relié de manière fixe à l'extrémité de travail (35).

5. Instrument dentaire (1) selon la revendication 4, dans lequel l'arbre est relié de manière fixe à la poignée (5) par l'intermédiaire d'un coude de sorte que le second axe de l'extrémité de travail (35) est oblique par rapport au premier axe.

6. Instrument dentaire (1) selon la revendication 5, dans lequel l'extrémité de travail (35) est un outil
choisi dans le groupe constitué par un fouloir pour fil, une extrémité Woodson, et une extrémité de périotome.

7. Instrument dentaire (1) selon la revendication 6, dans lequel le logement (4) encapsule l'élément (10).

8. Instrument dentaire (1) selon la revendication 7, dans lequel l'instrument dentaire (1) est formé à partir d'un matériau qui est autoclavable ou jetable.

9. Procédé de fabrication d'un instrument dentaire (1) selon la revendication 1, comprenant l'étape consistant à accoupler une
poignée (5) s'étendant le long d'un premier axe jusqu'à une extrémité de travail (35) s'étendant le long d'un second axe à l'aide d'un joint rotatif (15) ayant un logement (4) avec une cavité (20) d'une première géométrie prédéterminée formée à l'intérieur de celui-ci et un élément (10) d'une seconde géométrie prédéterminée positionné de manière rotative dans la cavité (20), de telle sorte que le logement (4) est libre de tourner autour de l'élément (10) en réponse à une force de rotation appliquée à l'extérieur du logement (4) par un utilisateur, pour faire tourner l'extrémité de travail (35) dans des orientations différentes par rapport à la poignée (5) par l'utilisateur tandis que la poignée (5) reste en position.

10. Procédé selon la revendication 9, comprenant en outre l'étape consistant à former le joint rotatif (15) de sorte que le logement (4) est formé intégralement autour de l'élément (10).

11. Procédé selon la revendication 10, dans lequel le logement (4) comporte au moins un repose-doigts (25).

12. Procédé selon la revendication 11, dans lequel l'étape consistant à former le joint rotatif (15) comprend l'impression tridimensionnelle du logement (4) et de l'élément (10) simultanément.

13. Procédé selon la revendication 12, dans lequel le joint rotatif (15) est formé à partir d'un matériau qui est autoclavable ou jetable.
